# EUROPEAN PATENT SPECIFICATION

(11) **EP 4 104 962 B1**
(45) Date of publication and mention of the grant of the patent: **30.07.2025**
(21) Application number: 22177421.9
(22) Date of filing: 07.06.2022
(51) Int. Cl.: B23K 15/00, B23K 15/02

(54) **ELECTRON BEAM WELDING**
ELEKTRONENSTRAHLSCHWEISSEN
SOUDAGE PAR FAISCEAU D'ÉLECTRONS

(30) Priority: 17.06.2021 GB 202108637
(43) Date of publication of application: 21.12.2022
(73) Proprietor: Rolls-Royce plc, London N1 9FX (GB)
(72) Inventor: Readyhoof, Stanley, Derby, DE24 8BJ (GB)
(74) Representative: Rolls-Royce plc

(56) References cited:
- EP-A2- 0 455 502
- WO-A1-82/02352
- DD-A1- 236 276
- DE-A1- 102009 058 900
- GB-A- 2 283 448
- JP-A- 2020 094 249
- JP-A- 2020 094 269
- US-B1- 6 639 173
- US-B2- 9 884 391

## Description

### Field of the Disclosure

The present disclosure concerns a method of electron beam (EB) welding.

### Background of the Disclosure

Electron beam welding is a known process and has been improved and developed over a number of decades. It is a desirable welding technique because it can be used to weld both similar and dissimilar metals, which is not possible with many other popular welding techniques. EB welding also provides a high metal joining rate along with a high-quality finish to the welding surface.

Prediction and control of weld microstructure is desirable in fabrication; this is because the microstructure impacts upon the joint strength and corrosion resistance which is crucial to component lifecycle justification. Despite the desirable weld products that are produced through EB welding there still remain some challenges. This is because some alloys are sensitive to microstructure phases when subjected to high cooling rates. However, due to a desire to achieve a high metal joining rate, EB processes are sometimes favoured over conventional arc welding processes, but the high traverse speeds involved often prompt formation of these phases. There are several typical solutions to avoid fast-cooling microstructure formation in EB welds. The first is to reduce the traverse speed of the welding process to speeds close to those employed for conventional arc-welds, however, this negates the advantage of the high joining rate associated with EB welding. The second is to switch to a conventional arc process. However, arc welding is generally inferior to EB welding in both the geometry of the welds that can be achieved and in the materials that can be welded. The third is to perform a heat treatment process on the work piece in order to raise the ambient workpiece temperature which reduces cooling rates; thus, allowing for an increase in the quality of the microstructure. These heat treatment processes have been developed to help improve the heat management of the welding process. Conventional oven heating has been used for this purpose, however, the capital costs associated with the hardware and the associated energy costs of this method are prohibitive. The use of electrical resistance blankets has similar limitations. The application of a flame may also be used; however, this poses the risk of having a naked flame in a working environment as well as the capital costs and requirements of purchasing consumables. The use of a diffused electron beam has also been applied, which uses a defocussed EB gun that is moved along the weld seam. This method, however, has the drawback that it wears out the EB filament more quickly, and as such leads to a higher replacement rate than without this process, which makes the process more expensive. Furthermore, for all of the aforementioned heat treatment techniques, obtaining a specific and constant temperature across the workpiece is difficult as it presents challenges with respect to positioning of heat sources, irregularities in heat flow from complex geometry, and variances in the time that the component cools prior to welding. Consequently, it is desirable to have an alternative method of electron beam welding that retains the high metal joining rate offered by electron beam welding without the challenges associated with pre-heating.

DE 10 2009 058900 A1 discloses a method of electron beam welding, wherein the method comprises guiding a first electron beam under formation of a welding seam along a joining area, guiding a second electron beam before the first electron beam along the joining area for pre-heating the joining area, and guiding a third electron beam along the welding seam for post-heating and smoothing the welding seam. US 6 639 173 B1 discloses a method of forming a welded assembly, wherein an electron beam is used to form a weldment that joins two or more articles to form the welded assembly. The method involves directing a second electron beam onto the weldment in the wake of the welding beam, in a manner that inhibits precipitation of a solutioned precipitation-strengthening phase so as to reduce the incidence of strain-age cracking in the weldment.

Japanese Patent Application JP 2020094269 and Japanese Patent Application JP 2020094249 disclose methods of improving the additive layer manufacturing technique of laser material deposition. The method is used to produce higher quality structures using the ALM method. German Patent application DD236276 discloses a method of rastering the beam of an electron beam welding process to improve the weld quality. European patent application EP0455502 discloses a method of electron beam welding in which the beam is split into distinct zones so as to improve the weld quality. International patent application WO82/02352 discloses a method of electron beam welding in which the beam is deflected into a predefined path about the weld area to control the energy in a zone.

### Summary of the Disclosure

According to a first aspect there is provided a method of electron beam welding comprising: splitting the output of an electron beam welder into two components, a pre/post heat ring and a fusion spot, applying the two outputs to a workpiece that is to be welded, traversing the two outputs along the desired weld path, and wherein the fusion spot lies within the pre/post heat ring and travels in tandem with and inside the pre/post heat ring.

The pre/post heat ring may be annular.

The fusion spot may be located at the centre of the pre/post heat ring.

The output of the electron beam welder may comprise 1 to 100,000 discrete points.

The beams may be deflected using the EB welder deflector coils.

The time the electron beam spends on each discrete point may be identical.

The electron beam welder may be operated at 500Hz. It has been found that operating at high frequencies means that the ring can have more power before it starts to melt the substrate.

The fusion spot may have a power of 51-70% of the total power of the beam, whilst the pre post heat ring may have a power of 49-30% of the total power of the beam.

The fusion spot may have 55-60% of the power of the beam, whilst the pre/post heat ring may have a power of 45-40% of the total power of the beam.

The fusion spot may have a diameter between 1-5 mm and the pre/post heat ring may have an outer diameter of 30 - 50 mm and an inner diameter of 10 - 30 mm.

The method may include programming weld parameters and coordinates into a human machine interface.

The method may be controlled by a computer program in which the variables that can be controlled are the fusion spot pattern, the pre/post heat ring outer diameter, the pre/post heat ring inner diameter, and the power ratio between the fusion spot and the pre/post heat ring.

### Brief description of the drawings

Embodiments will now be described by way of example only, with reference to the Figures, in which:
**Figure 1** is a schematic of a prior art method of operating an electron beam welder.
**Figure 2** is a schematic of the method of operating an electron beam welder according to the present invention.
**Figure 3a** presents a cross structural scan across a weld seam using a standard EB welding method.
**Figure 3b** presents a cross structural scan across a weld seam using an EB welding method according to the present invention.

The following table lists the reference numerals used in the drawings with the features to which they refer:

| Ref no. | Feature | Figure |
|---|---|---|
| **12** | Workpiece | 1,2 |
| **14** | Workpiece | 1,2 |
| **16** | Weld seam | 1,2 |
| **18** | Diffuse beam | 1 |
| **20** | Pre/post heat ring | 2 |
| **22** | Fusion spot | 2 |
| **D** | Direction of travel | 1 |

### Detailed Description of the Disclosure

Aspects and embodiments of the present disclosure will now be discussed with reference to the accompanying figures. Further aspects and embodiments will be apparent to those skilled in the art.

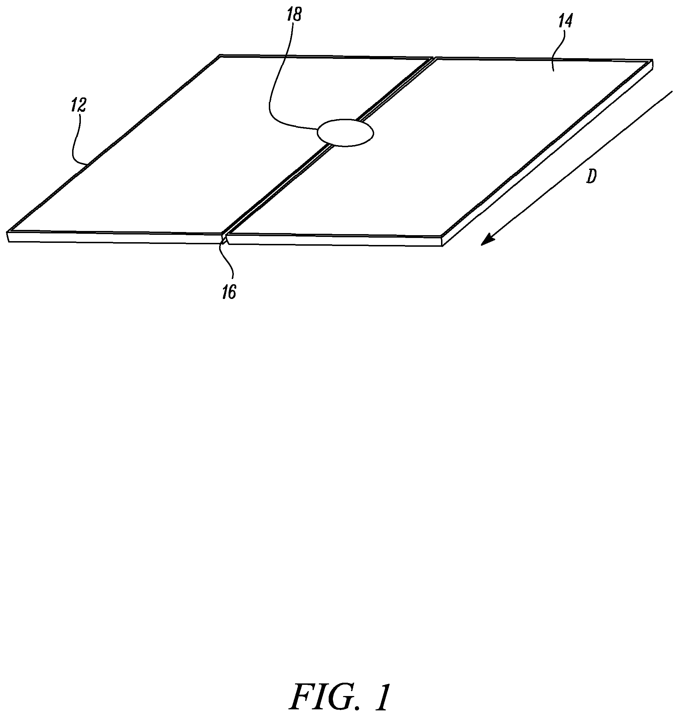

Figure 1 shows a prior art method of heating a workpiece prior to the step of EB welding. Work pieces 12 and 14 are placed close together; the interface between work pieces 12 and 14 form a weld seam 16. Prior to operating an EB welder (not shown) to join the two work pieces together, a diffuse electron beam 18 from the EB welder is moved along the weld seam in a chosen direction of travel D. The beam is diffused to such a degree that it allows the weld seam and the area around the weld seam to be heated to a temperature greater than that of the rest of the material of the workpieces. This heating is not hot enough to cause any melting of the workpiece. Melting of material around the seam is undesirable in the process because it can lead to damage or deformation of the workpiece. To move the electron beam along the weld seam the electron beam is directed and moved using a cart or by moving the gun column along a railing or similar. Through the use of focussing coils, the beam waist position relative to the workpiece can be moved and thus the beam intensity per unit area applied to the surface can be controlled. Through control of the intensity of the electron beam it is possible to set the amount of heating that a region undergoes. After this diffused preheat process has been carried out the electron beam is then focused onto the weld seam to create a beam with enough energy to melt the material and therefore weld the two parts of the workpiece together. However, a downside of this process is that it requires two steps and as such increases the processing time, which in turn increases the cost to build of each component. Furthermore, it wears out the filament faster than in normal usage. Therefore, the filament needs replacing more often, which results in greater downtime of the machines along with the associated cost of doing this. As a result, components joined using this process have a greater associated cost.

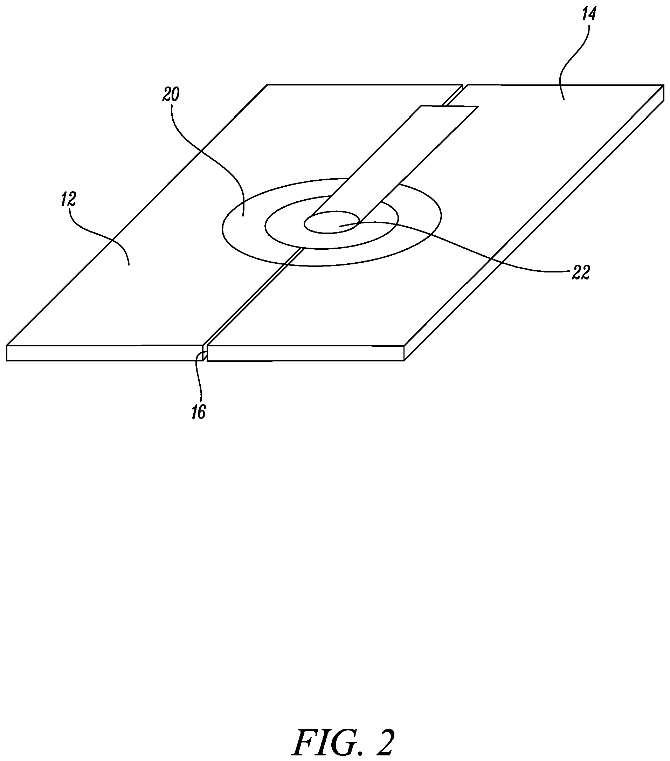

Figure 2 shows an aspect of the present invention. In this figure, it demonstrates an improved electron beam welding technique in which the weld beam is rapidly rastered between two distinct patterns. This is achieved through the use of deflector coils which are housed in the gun column near to the focussing coils. The pattern comprises a pre/post heat ring 20 and a fusion spot 22 that are rastered between. The fusion spot 22 lies within the pre/post heat ring 20. Although the term spot is used to define the fusion pass, it may be the case that this can be any suitable geometric pattern. Although the term ring is used to describe the pre/post heat ring it may also be the case that the ring can be any suitable geometric shape. Furthermore, the ring may also be solid or hollow, with the fusion spot still being focussed to a point within the shape that forms the ring. In particular, the fusion spot may be directed to the centre of the ring. The ratio between the power of the fusion spot and the pre/post heat ring may be adjusted relative to each other. For example, the fusion spot may have an equal power intensity to the pre/post heat ring or may have a higher power. For example, the fusion spot may have a power of 51-70% of the total power of the beam, whilst the pre post heat ring may have a power of 49-30% of the total intensity. In particular it has been found that the fusion spot having 55-60% of the power, whilst the pre/post heat ring having a power of 45-40% of the total power. The fusion spot and the pre/post heat ring travel along the workpiece 12,14 in a chosen direction in tandem, that is to say they move together at the same relative speed, so that their position relative to each other is always the same. In this case the fusion spot is maintained in the centre of the pre/post heat ring; this means that all the points that are welded are subject to the same amount of heat treatment. By doing it this way it increases the uniformity of the weld and improves its physical properties. The fusion spot may be a solid or a hollow shape. The electron beam may comprise of between 1 and 100,000 discrete points. By increasing the number of spots, if the equipment allows, it is possible to create a greater number of shape permutations. Increasing the number of spots also has the advantage that there is less peak energy intensity. The pre/post heat ring has a lower heat intensity than the fusion spot. This provides the pre/post heat ring with a lower intensity, and thus a lower power than the fusion spot, which prevents any melting resulting from the pre/post heat ring beam. In addition, a dynamic focus coil can be used to reduce the peak intensity of the pre/post heat ring. It therefore operates in the same way as the diffused beam in the prior art. The size and power of the pre/post heat ring may be optimised for different materials and specific geometries. The size of the spots that are used depends upon the materials that are being welded. For example, the fusion spot may be between 1-5 mm in diameter and the pre/post heat ring may have an outer diameter of 30 - 50 mm and an inner diameter of 10 - 30 mm. As the electron beam in both the fusion spot 22 and the pre/post heat ring 20 travels along the workpiece it spends an equal amount of time at each point but point spacing may be varied to allow the energy distribution to be non-uniformly applied. Alternatively, the cart traverse speed may vary during the welding process, so less time is spent in some areas than others. The radius of the pre/post heat ring and the fusion spot can be used to control the intensity of the electron beam, this in turn controls the temperature of the workpiece around the weld through the amount of heat produced by the pre/post heat ring 20 and the temperature of the melt at the interface where the fusion spot 22 is directed. This allows the amount of heating around the weld seam 16 to be determined, as such this process can be used on different materials and different thicknesses. This allows an operator to tailor the weld parameters for different applications or to produce a desired weld in different workpiece materials. The process may be controlled by a computer program. The program having variables that can be controlled being the fusion spot pattern, the pre/post heat ring outer diameter, the pre/post heat ring inner diameter, and the power ratio between the fusion spot and the pre/post heat ring. The overall power of each of the pattern is modified by adjusting the overall beam current of the machine.

Following the pass of the fusion spot the two or more workpieces are joined together via a weld of the fused material at the interface of the two or more workpieces. Using this process of having a pre/post heat ring results in the EB weld having a slower rate of cooling than that of either a direct EB weld or one in which a diffused beam is used prior to the weld. This allows for greater control of the crystallisation of the weld. In using the described technique there is no need to run a pre-heat treatment, as this is part of the process in the pre/post heat ring. Nor is there a need for any additional hardware and the associated cost of adding this to the EB welding machine. The described process of EB welding using a fusion spot within a pre/post heat ring replicates a TIG process by decreasing the power density and increasing the heat input over the welded area, but without compromising the fast traverse speeds that can be achieved with EB welding. Consequently, it allows for improved welds to be achieved.

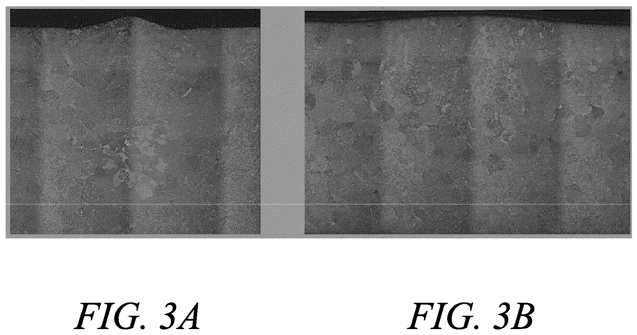

Figure 3 demonstrates the change in the microstructure as a result of employing the welding technique of the present invention.

Figure 3A shows a conventional EB weld, in which it has undergone a fast cooling process. In this figure, it can be seen that there are a number of large block shaped microstructures that are present along the weld seam. The presence of these large block shaped microstructures is undesirable as they affect the quality of the structure. Figure 3B shows a weld as performed by the disclosed method. In this figure it can be seen that the large block shaped microstructures are not produced after the weld process. Instead the microstructures are much smaller. This is because the pre/post heat ring allows the weld to cool slower than in the case of a normal EB weld. By cooling slower the crystallisation of the weld can be controlled. Consequently, the microstructure remains roughly consistent across the weld seam and is similar to the microstructure present in both of the metal work pieces. Thus, the disclosed process produces an improved quality of the weld with greater controlled crystallisation which results in smaller microstructures. Ultimately this improves the strength of the weld. The overall quality of the weld can be controlled by choosing appropriate intensities for the pre/post heat ring as well as for the fusion spot. Another aspect of this technique which is improved over the use of a diffused beam pass is that the disclosed welding process is that it only requires a single pass and as such reduces the number of steps that are required. Thus, reducing the cost. It also reduces cathode wear. Assurance of pre/post-heat on non-linear weld geometry can be achieved if the pre/post heating ring is symmetric in all axes aligned to the workpiece.

## Claims

1. A method of electron beam welding comprising:
splitting the output of an electron beam welder into two components, a pre/post heat ring and a fusion spot by rastering between the pre/post heat ring and a fusion spot,
applying the two outputs to a workpiece that is to be welded,
traversing the two outputs along the desired weld path, and
wherein the fusion spot lies within the pre/post heat ring and travels in tandem with and inside the pre/post heat ring.

2. The method according to claim 1, wherein the pre/post heat ring is annular.

3. The method according to any preceding claim, wherein the fusion spot is located at the centre of the pre/post heat ring.

4. The method according to any preceding claim, wherein the output of the electron beam welder comprises 1,000 to 100,000 discrete points.

5. The method according to any preceding claim, wherein the beams are deflected using the EB welder deflector coils.

6. The method according to claim 4, wherein the time the electron beam spends on each discrete point is identical.

7. The method according to any preceding claim, wherein the electron beam welder is operated at 500Hz.

8. The method according to any preceding claim, wherein the fusion spot has a power of 51-70% of the total power of the beam, whilst the pre post heat ring may have a power of 49-30% of the total power of the beam

9. The method according to claim 8, wherein the fusion spot has 55-60% of the power of the beam, whilst the pre/post heat ring having a power of 45-40% of the total power of the beam.

10. The method according to any preceding claim, wherein the fusion spot has a diameter between 1-5 mm and the pre/post heat ring has an outer diameter of 30 - 50 mm and an inner diameter of 10 - 30 mm.

11. The method according to any preceding claim, further comprising programming weld parameters and coordinates into a human machine interface.

12. The method according to claim 11, wherein the method Is controlled by a computer program in which the variables that can be controlled are the fusion spot pattern, the pre/post heat ring outer diameter, the pre/post heat ring inner diameter, and the power ratio between the fusion spot and the pre/post heat ring.

## Patentansprüche

1. Verfahren zum Elektronenstrahlschweißen, umfassend:
Aufteilen des Ausgangs eines Elektronenstrahlschweißgeräts in zwei Komponenten, einen Vor-/Nachwärmering und einen Schmelzfleck, durch Rastern zwischen dem Vor-/Nachwärmering und einem Schmelzfleck,
Anwenden der zwei Ausgänge auf ein Werkstück, das zu schweißen ist,
Abfahren der zwei Ausgänge entlang des gewünschten Schweißwegs, und
wobei der Schmelzfleck innerhalb des Vor-/Nachwärmerings liegt und sich zusammen mit und innerhalb des Vor-/Nachwärmerings fortbewegt.

2. Verfahren nach Anspruch 1, wobei der Vor-/Nachwärmering ringförmig ist.

3. Verfahren nach einem vorhergehenden Anspruch, wobei sich der Schmelzfleck am Mittelpunkt des Vor-/Nachwärmerings befindet.

4. Verfahren nach einem vorhergehenden Anspruch, wobei der Ausgang des Elektronenstrahlschweißgeräts 1.000 bis 100.000 diskrete Punkte umfasst.

5. Verfahren nach einem vorhergehenden Anspruch, wobei die Strahlen unter Verwendung der Ablenkspulen des EB-Schweißgeräts abgelenkt werden.

6. Verfahren nach Anspruch 4, wobei die Zeit, die der Elektronenstrahl an jedem diskreten Punkt verbringt, identisch ist.

7. Verfahren nach einem vorhergehenden Anspruch, wobei das Elektronenstrahlschweißgerät bei 500 Hz betrieben wird.

8. Verfahren nach einem vorhergehenden Anspruch, wobei der Schmelzfleck eine Leistung von 51-70 % der Gesamtleistung des Strahls aufweist, während der Vor-/Nachwärmering eine Leistung von 49-30 % der Gesamtleistung des Strahls aufweisen kann.

9. Verfahren nach Anspruch 8, wobei der Schmelzfleck 55-60 % der Leistung des Strahls aufweist, während der Vor-/Nachwärmering eine Leistung von 45-40 % der Gesamtleistung des Strahls aufweist.

10. Verfahren nach einem vorhergehenden Anspruch, wobei der Schmelzfleck einen Durchmesser zwischen 1-5 mm aufweist und der Vor-/Nachwärmering einen Außendurchmesser von 30 - 50 mm und einen Innendurchmesser von 10 - 30 mm aufweist.

11. Verfahren nach einem vorhergehenden Anspruch, ferner umfassend Einprogrammieren von Schweißparametern und -koordinaten in eine Mensch-Maschine-Schnittstelle.

12. Verfahren nach Anspruch 11, wobei das Verfahren durch ein Computerprogramm gesteuert wird, in dem die Variablen, die gesteuert werden können, das Schmelzfleckmuster, der Außendurchmesser des Vor-/Nachwärmerings, der Innendurchmesser des Vor-/Nachwärmerings und das Leistungsverhältnis zwischen dem Schmelzfleck und dem Vor-/Nachwärmering sind.

## Revendications

1. Procédé de soudage par faisceau d'électrons comprenant :
la division de la sortie d'une soudeuse à faisceau d'électrons en deux composants, un anneau de pré/post-chaleur et un point de fusion par tramage entre l'anneau de pré/post-chaleur et un point de fusion,
l'application des deux sorties à une pièce à travailler qui doit être soudée,
la traversée des deux sorties le long du chemin de soudure souhaité, et
dans lequel le point de fusion se trouve dans l'anneau de pré/post-chaleur et se déplace en tandem avec l'anneau de pré/post-chaleur et à l'intérieur de celui-ci.

2. Procédé selon la revendication 1, dans lequel l'anneau de pré/post-chaleur est annulaire.

3. Procédé selon une quelconque revendication précédente, dans lequel le point de fusion est situé au centre de l'anneau de pré/post-chaleur.

4. Procédé selon une quelconque revendication précédente, dans lequel la sortie de la soudeuse à faisceau d'électrons comprend 1 000 à 100 000 points discrets.

5. Procédé selon une quelconque revendication précédente, dans lequel les faisceaux sont défléchis à l'aide des bobines de déflecteur de soudeuse à FE.

6. Procédé selon la revendication 4, dans lequel le temps que le faisceau d'électrons passe sur chaque point discret est identique.

7. Procédé selon une quelconque revendication précédente, dans lequel la soudeuse à faisceau d'électrons fonctionne à 500 Hz.

8. Procédé selon une quelconque revendication précédente, dans lequel le point de fusion présente une puissance de 51 à 70 % de la puissance totale du faisceau, tandis que l'anneau de pré/post-chaleur peut présenter une puissance de 49 à 30 % de la puissance totale du faisceau.

9. Procédé selon la revendication 8, dans lequel le point de fusion présente 55 à 60 % de la puissance du faisceau, tandis que l'anneau de pré/post-chaleur présente une puissance de 45 à 40 % de la puissance totale du faisceau.

10. Procédé selon une quelconque revendication précédente, dans lequel le point de fusion présente un diamètre compris entre 1 et 5 mm et l'anneau de pré/post-chaleur présente un diamètre extérieur de 30 à 50 mm et un diamètre intérieur de 10 à 30 mm.

11. Procédé selon une quelconque revendication précédente, comprenant en outre la programmation de paramètres de soudure et de coordonnées dans une interface homme-machine.

12. Procédé selon la revendication 11, dans lequel le procédé est commandé par un programme informatique où les variables qui peuvent être commandées sont le motif de point de fusion, le diamètre extérieur de l'anneau de pré/post-chaleur, le diamètre intérieur de l'anneau de pré/post-chaleur et le rapport de puissance entre le point de fusion et l'anneau de pré/post-chaleur.
